# EUROPÄISCHE PATENTSCHRIFT

(11) **EP 2 896 583 B1**
(45) Veröffentlichungstag und Bekanntmachung des Hinweises auf die Patenterteilung: **25.10.2017**
(21) Anmeldenummer: 15150903.1
(22) Anmeldetag: 13.01.2015
(51) Int. Cl.: B65G 27/08

(54) **Vibrationszuführsystem**
Vibratory feed system
Système d'acheminement vibratoire

(30) Priorität: 21.01.2014 DE 102014100666
(43) Veröffentlichungstag der Anmeldung: 22.07.2015
(73) Patentinhaber: Rhein-Nadel Automation GmbH, 52068 Aachen (DE)
(72) Erfinder: Grevenstein, Jakob, 52076 Aachen (DE)
(74) Vertreter: Brötz, Helmut

(56) Entgegenhaltungen:
- GB-A- 2 301 075
- US-A- 3 730 386

## Beschreibung

Die Erfindung betrifft ein Zuführsystem nach dem Oberbegriff des Anspruchs 1, insbesondere für die Zuführung von Teilen zu einer Montage- und/ oder Bestückungs- und/ oder Bearbeitungs- und/oder Verpackungseinrichtung oder dergleichen, wobei das Zuführsystem umfasst: zumindest eine Ordnungseinrichtung, insbesondere zum Transport und/ oder Vereinzeln und/ oder Sortieren und/ oder Ausrichten und/ oder Verteilen von Teilen, und zumindest eine Auffangeinrichtung zum Auffangen und insbesondere zum Abtransport von im Betrieb von der Ordnungseinrichtung fallenden Teilen, wobei das Zuführsystem zumindest zwei, vorzugsweise zueinander baugleiche, Linearvibrationsförderantriebe umfasst, die mit der Ordnungseinrichtung gekoppelt sind, wobei diese Linearvibrationsförderantriebe voneinander beabstandet, vorzugsweise mit parallel zueinander orientierten Vibrationsebenen, angeordnet sind.

Derartige Zuführsysteme, die man auch als Zuführvorrichtungen bezeichnen könnte, dienen typischerweise dazu, Teile, häufig Kleinteile, insbesondere mit einem Gewicht von nur wenigen Gramm und/ oder mit Abmessungen von nur wenigen Millimetern oder Zentimetern, bspw. in der pharmazeutischen oder der medizinischen Industrie verarbeitete Teile, einer nachgeordneten, d. h. einer nicht zu dem Zuführsystem gehörenden, Einrichtung zuzuführen, bei der es sich bspw. um eine Montage- und/oder Bestückungs- und/oder Bearbeitungs- und/ oder Verpackungseinrichtung oder dergleichen handeln kann. Die Zuführung der beweglichen Teile soll je nach Anforderungen insbesondere in einer bestimmten Ausrichtung und/ oder Sortierung und/ oder Anzahl oder dergleichen erfolgen. Anstelle von Teilen könnte man auch von zu ordnenden Werkstücken oder einfach nur von Gegenständen sprechen. Solche gesonderten Einrichtungen sind nicht Teil der vorliegenden Erfindung; sie werden typischerweise von einem Anwender bereitgestellt. Bei herkömmlichen Zuführsystemen erfolgt das Ausrichten mittels einer Ordnungseinrichtung, die von einem Linearvibrationsantrieb zu Schwingungen kleiner Amplitude, d. h. zu Vibrationen, angeregt wird. Derartige Ordnungseinrichtungen können in einem Fachmann an sich bekannter Weise bspw. Schienen- und Sortier-Schikanen beinhalten. Kleine Teile, die einer nachgeordneten Einrichtung zugeführt werden sollen, können dem Zufuhrsystem von außen kontinuierlich oder diskontinuierlich zugeführt werden. Sie durchlaufen während der Zufuhr die Ordnungseinrichtung des Zuführsystems. Solche Teile, die dabei bestimmte durch die Ausführung der Ordnungseinrichtung vorgegebene Kriterien, wie bspw. Lage- und Formkriterien nicht erfüllen, fallen während der Zuführung von der Ordnungseinrichtung nach unten. Bei herkömmlichen Zuführsystemen fallen die Kleinteile in eine mit der Ordnungseinrichtung starr verbundene, also gemeinsam mit der Ordnungseinrichtung schwingende Wanne. Aufgrund insbesondere die Steifigkeit betreffender konstruktiver Vorgaben ist dabei bisher eine Fallhöhe der Kleinteile von der Ordnungseinrichtung in die Auffangeinrichtung bzw. in die Wanne der Kleinteile von ca. 120 bis 150 Millimeter nicht zu vermeiden. Je nach Beschaffenheit der Teile kann dadurch die Gefahr von Beschädigungen bestehen. Hinzu kommt, dass die auf die Auffangeinrichtung bzw. in die Wanne gefallenen Kleinteile, da diese im Stand der Technik schwingungsmäßig mit der Ordnungseinrichtung gekoppelt ist, in der Auffangeinrichtung in gleicher Richtung wie die auf der Ordnungseinrichtung verbliebenen kleinen Teile bis zu einem Auslass gefördert und von dort über gesonderte Fördereinrichtungen wieder zum Anfang der Ordnungseinrichtung für einen erneuten Durchlauf transportiert werden müssen. Dies bedingt einen zusätzlichen konstruktiven Aufwand, der auch zu einem unerwünschten Platzbedarf und Kosten führt.

Aus US 3,730,386 A ist ein Zuführsystem nach dem Oberbegriff des Anspruchs 1 bekannt, welches mehrere, bezüglich der Förderrichtung in Reihe angeordnete Zuführsysteme aufweist. Die Ordnungseinrichtung von je einem Zuführsystem wird mittels eines Linearvibrationsförderantriebes angetrieben. Aus GB 2 301 075 A ist eine Fördereinrichtung bekannt.

Davon ausgehend liegt der Erfindung die Aufgabe zugrunde, ein Zuführsystem der eingangs genannten Art vorteilhaft weiterzubilden, so dass insbesondere einzelne oder mehrere der zuvor beschriebenen Nachteile von herkömmlichen Zuführsystemen vermieden werden können.

Die Aufgabe wird durch die Merkmale des Anspruchs 1 gelöst. Die Ordnungseinrichtung ist an einer, vorzugsweise rahmenartigen, Tragstruktur, welche eine oder mehrere von ihrer Oberseite zu ihrer Unterseite durchgehende Ausnehmungen aufweist, befestigt und oberhalb der Tragstruktur angeordnet, wobei an der Tragstruktur an oder im Bereich ihrer beiden bezüglich der Ordnungseinrichtung seitlichen Ränder je ein tiefer als die Tragstruktur angeordneter Linearvibrationsförderantrieb befestigt ist. Eine Anordnung, bei welcher das Zuführsystem zumindest zwei, vorzugsweise zueinander baugleiche, Linearvibrationsförderantriebe umfasst, die mit der Ordnungseinrichtung in zur Übertragung von Vibrationen geeigneter Weise mechanisch gekoppelt sind, wobei diese Linearvibrationsförderantriebe voneinander beabstandet, vorzugsweise mit parallel zueinander orientierten Vibrationsebenen, angeordnet sind, könnte man auch als katamaranartig bezeichnen. Unter einer Vibrationsebene wird eine gedachte geometrische Ebene verstanden, innerhalb der Komponenten, insbesondere ein Schwinger und eine Gegenmasse, des Linearvibrationsförderantriebs im Betrieb richtungsmäßig Vibrationsbewegungen relativ zueinander ausführen. Bevorzugt ist, dass einem jeweiligen Linearvibrationsförderantrieb nur eine Vibrationsebene zugeordnet ist. Die voneinander beabstandete Anordnung von zumindest zwei Linearvibrationsförderantrieben schafft einerseits die Möglichkeit, diese, verglichen mit dem Fall, dass nur ein Linearvibrationsförderantrieb vorhanden ist, seitlich weiter von der Ordnungseinrichtung zu beabstanden. Dies ermöglicht die Schaffung eines so breiten Zwischenraumes, dass darin die Auffangeinrichtung und/oder ein ihr zugeordneter gesonderter Antrieb entweder teilweise oder vollständig angeordnet werden kann. Vorzugsweise sind zwei mit der Ordnungseinrichtung zur Vibrationsübertragung gekoppelte bzw. verbundene Linearvibrationsförderantriebe vorgesehen, zwischen denen sich eine Auffangeinrichtung befinden kann. In Verallgemeinerung können aber auch bspw. drei oder mehr, jeweils seitlich (also quer zu der Vibrationsebene) voneinander beabstandete Linearvibrationsförderantriebe vorhanden sein, die jeweils paarweise einen Zwischenraum beranden, indem sich bspw. jeweils eine Auffangeinrichtung und/ oder ein damit verbundener Antrieb befinden können. Insofern ist eine bzgl. einer zu der Zuführrichtung parallelen Längsmittelebene des Zuführsystems seitensymmetrische Anordnung bevorzugt. Indem die Auffangeinrichtung mit einem gesonderten Antrieb verbunden ist, kann ihr Antrieb unabhängig von dem der Ordnungseinrichtung erfolgen.

Zur schwingungsmäßigen Koppelung zwischen den Linearvibrationsförderantrieben bzw. des jeweils zugehörigen Schwingers und der Ordnungseinrichtung dienen vorzugsweise Verbindungsmittel, die in dem Sinne als steif zu bezeichnen sind, dass sie zufolge der Vibrationen keine oder zumindest keine erheblichen Verformungen in der Vibrationsrichtung erfahren.

Zur bevorzugten Weiterbildung besteht die Möglichkeit, dass die Ordnungseinrichtung relativ zu der Auffangeinrichtung bewegbar angeordnet ist, so dass die Ordnungseinrichtung im Betrieb mittels der Linearvibrationsförderantriebe zu Vibrationsbewegungen relativ zu der Auffangeinrichtung anregbar ist. Die Merkmale der zuvor genannten bevorzugten Weiterbildung ermöglichen eine schwingungsmäßige Entkopplung zwischen der Ordnungseinrichtung und der Auffangeinrichtung. Dies wiederum ermöglicht es, dass die Richtungen, in denen die beweglichen Teile im Betrieb von der Ordnungseinrichtung einerseits und von der Auffangeinrichtung andererseits transportiert werden, nun unabhängig voneinander wählbar sind, ebenso die jeweiligen Bewegungsgeschwindigkeiten der Teile. Gleichzeitig kann der Abtransport heruntergefallener Teile platzsparend unter der Ordnungseinrichtung erfolgen. Hinzu tritt die Möglichkeit, die Auffangeinrichtung an die Ordnungseinrichtung anzunähern, so dass sich die Fallhöhe der Teile verringert, insbesondere ohne dass eine Veränderung der Schwingmasse erfolgt. Um die Ordnungseinrichtung von der Auffangeinrichtung schwingungsmäßig zu entkoppeln, so dass sich Vibrationen der Ordnungseinrichtung nicht oder in nur unerheblichem Umfang auf die Auffangvorrichtung übertragen, besteht die Möglichkeit, dass zwischen der Ordnungseinrichtung und der Auffangeinrichtung keine durchgehend in dem zuvor beschriebenen Sinne steife Verbindung ausgebildet ist. Nachfolgend wird unter der Zuführrichtung die Hauptbewegungsrichtung von Teilen auf der Ordnungseinrichtung und unter der Transportrichtung die Hauptbewegungsrichtung von Teilen auf der Auffangeinrichtung im Betrieb verstanden. Diese Richtungen können bei bspw. zueinander paralleler oder zueinander geneigter Orientierung in einer Betrachtung in Vertikalrichtung entweder entgegengesetzt oder gleichgerichtet sein. Auch besteht die Möglichkeit, dass diese Richtungen bei Betrachtung in Vertikalrichtung zueinander quer verlaufen.

Es bestehen zahlreiche weitere Möglichkeiten zur bevorzugten Weiterbildung, wobei solche Merkmale im Rahmen der Erfindung aber auch selbstständig von Bedeutung sein können. Es besteht bspw. die Möglichkeit, dass die Ordnungseinrichtung eine oder mehrere Teilezufuhrstrecken, die als Förderstrecken für Teile dienen, aufweisen kann. Eine jeweilige Teilezuführstrecke kann eine oder mehrere pfadartige und/ oder demgegenüber erweiterte Förderflächen für die beweglichen Teile aufweisen. Förderflächen können bspw. an einer oder mehreren Schienen ausgebildet sein. Neben einer insofern unteren Förderfläche kann insbesondere eine seitliche Anlage zur Abstützung von Teilen vorhanden sein. Alternativ oder kombinativ kann die Teilezufuhrstrecke Einrichtungen (sog. "Schikanen") aufweisen zum Vereinzeln und/oder Sortieren und/oder Ausrichten und/oder Verteilen oder dergleichen von Teilen unter Ausnutzung bestimmter, insbesondere geometrischer, Merkmale der Teile. Bspw. kann es sich um Sortiermerkmale handeln. Bei diesen Einrichtungen kann es sich bspw. um gerade und/ oder gebogene Schienenabschnitte, um Verengungen oder Verzweigungen oder um dergleichen handeln. Derartige in Betracht zu ziehende Schikanen sind einem Fachmann bekannt, so dass sie hier keiner näheren Erläuterung bedürfen. Im Betrieb wird die Ordnungseinrichtung durch den oder durch die Linearvibrationsförderantriebe zu Vibrationen angeregt, deren Richtung vorzugsweise geneigt zu der Förderfläche ist. Anstelle von Vibrationen könnte jeweils auch von Schwingungen gesprochen werden. Dies bewirkt, dass der Ordnungseinrichtung lose zugeführte Teile nicht auf der dortigen Förderfläche ruhen, sondern zu Mikro-Wurfbewegungen mit einer horizontalen Richtungskomponente in die Zuführrichtung angeregt werden, so dass eine Förderwirkung resultiert. Dies erleichtert die gewünschte Manipulation der Teile, insbesondere hinsichtlich ihrer Lage, an den Schikanen. Andererseits bewirken die Vibrationen, dass solche Teile, welche die von den Schikanen bestimmten Anforderungen dort nicht erfüllen, von der Ordnungseinrichtung fallen. Um solche Teile dennoch weiter nutzen zu können, werden sie von der Auffangeinrichtung aufgefangen und dann vorzugsweise wieder in Richtung zu dem Eingang der Ordnungseinrichtung transportiert. Bei Betrachtung in vertikal, insbesondere in quer zu der Zuführrichtung, orientierten Querschnitten ist die Auffangeinrichtung zweckmäßig tiefer liegend, vorzugsweise unterhalb und/oder seitlich, der Ordnungseinrichtung angeordnet. Die herkömmlich große Fallhöhe, die bei mitschwingender Auffangeinrichtung aufgrund der Stabilitätserfordernisse im Stand der Technik resultierte, kann nun bspw. dadurch vermieden werden, dass die Ordnungseinrichtung direkt oder indirekt, insbesondere mittelbar mittels einer Tragstruktur wie bspw. einem Rahmen, auf den beiden Linearvibrationsförderantrieben abgestützt ist, wobei die Auffangeinrichtung nicht zur Stabilisierung der Ordnungseinrichtung benötigt wird, daher praktisch jede gewünschte Ausgestaltung annehmen kann und sich so weit von unten an die Ordnungseinrichtung annähern lässt, dass die Ordnungseinrichtung gerade noch ihre Vibrationsbewegungen relativ zu der Auffangeinrichtung ausführen kann. Auf diese Weise kann die Fallhöhe von Teilen minimiert werden. Das Zuführsystem kann für jeden der Linearvibrationsförderantriebe eine Stromversorgung und Steuerung oder Regelung aufweisen. Für mehrere, gemeinsam zum Antrieb der Ordnungseinrichtung dienende Linearvibrationsförderantriebe kann eine gemeinsame Steuerung oder Regelung zur zueinander phasensynchronen Spannungsversorgung mit elektrischer Wechselspannung vorhanden sein.

Es besteht die Möglichkeit, dass die Ordnungseinrichtung zumindest eine Teileführung umfasst und dass sich die Auffangeinrichtung zum Auffangen von im Betrieb von der Ordnungseinrichtung herabfallenden Teilen ganz oder teilweise, insbesondere zumindest eine der Auffangeinrichtung zugehörige Auffangoberfläche zum Auffangen von im Betrieb von der Ordnungseinrichtung herabfallenden Teile, tiefer liegend als die Teileführung der Ordnungseinrichtung, insbesondere unterhalb (also direkt darunter) und/ oder seitlich (also seitlich tieferliegend) der Teileführung, erstreckt. Dies ist bezogen auf senkrechte, quer zu der Vibrationsebene orientierte Querschnitte, durch die sich die Auffangeinrichtung bzw. deren Auffangoberfläche und die Ordnungseinrichtung bzw. deren Teileführung erstrecken. Die Teileführung umfasst oder wird ausgebildet durch den oder die Oberflächenbereiche der Ordnungseinrichtung, der oder die im Betrieb zur Führung oder in weiterem Sinne zur Beeinflussung von Lage und/ oder Ausrichtung von sich bewegenden Teilen zwischen zumindest einem Eintritt der Ordnungseinrichtung und zumindest einem Austritt der Ordnungseinrichtung bestimmt ist bzw. sind. Je nach Anforderungen kann die Teileführung bspw. eine Führung entlang nur eines möglichen Führungspfades vorgeben, dessen Verlassen zum Herabfallen der Teile führt, oder die Teileführung kann verschiedene Bewegungswege der Teile zulassen, bspw. mittels verbreiterter Führungen, Verzweigungen oder dergleichen.

Auch besteht die Möglichkeit, dass das Zuführsystem zumindest einen weiteren, d. h. zusätzlich zu dem oder den der Ordnungseinrichtung zugeordneten Linearvibrationsförderantrieben vorgesehenen, Antrieb aufweist, mittels dem zumindest eine der Auffangeinrichtung zugehörige, im Betrieb von der Ordnungseinrichtung herabfallende Teile auffangende Auffangoberfläche relativ zu der Ordnungseinrichtung bewegbar ist für den Abtransport von Teilen in der Transportrichtung, wobei insbesondere vorgesehen ist, dass der Antrieb in vertikal orientierten Querschnitten tiefer als die Auffangeinrichtung, insbesondere mittig unterhalb der Auffangeinrichtung angeordnet ist. Auch besteht die Möglichkeit, dass die Auffangeinrichtung in einer vertikalen Projektionsbetrachtung (also in einer vertikal zu der Aufstellebene gerichteten Projektionsbetrachtung) zwischen den beiden mit der Ordnungseinrichtung gekoppelten Linearvibrationsförderantrieben angeordnet ist und dass insbesondere ein mit der Auffangeinrichtung verbundener Antrieb in einer vertikalen Projektionsbetrachtung zwischen den beiden mit der Ordnungseinrichtung gekoppelten Linearvibrationsförderantrieben angeordnet ist. Vorzugsweise ist vorgesehen, dass die Auffangeinrichtung räumlich ganz oder teilweise in dem Zwischenraum zwischen den beiden mit der Ordnungseinrichtung gekoppelten Linearvibrationsförderantrieben angeordnet ist und dass insbesondere der mit der Auffangeinrichtung verbundene Antrieb räumlich ganz oder teilweise in dem Zwischenraum zwischen den beiden mit der Ordnungseinrichtung gekoppelten Linearvibrationsförderantrieben angeordnet ist. Es besteht die Möglichkeit, dass es sich bei dem zur Bewegung der Auffangoberfläche dienenden Antrieb um einen weiteren Linearvibrationsförderantrieb handelt, der insbesondere baugleich zu den mit der Ordnungseinrichtung gekoppelten Linearvibrationsförderantrieben sein kann. Alternativ kann es sich aber bei der Auffangeinrichtung auch um jede andere, zum Auffangen herabfallender Teile geeignete Einrichtung handeln. Bspw. kommt auch ein Fließband in Betracht, das bspw. mit einem Elektromotor als Antrieb zusammenwirkt. Denkbar wäre auch eine unbewegte Auffangeinrichtung, bspw. ein unbewegter Auffangbehälter, eine schräge Rutsche oder dergleichen.

Bevorzugt ist, dass die Ordnungseinrichtung in einer vertikalen Projektionsbetrachtung, insbesondere mittig, zwischen den beiden Linearvibrationsförderantrieben angeordnet ist. Vorzugsweise erstreckt sich die Zuführrichtung der Ordnungseinrichtung parallel zu den Vibrationsebenen der jeweiligen Schwinger der Linearvibrationsförderantriebe. Der Begriff Tragstruktur ist in weitem Sinn zu verstehen. Anstelle eines Rahmen könnte es sich auch bspw. um eine Platte mit einer oder mehreren Durchgangsöffnungen handeln.

Als zweckmäßig wird angesehen, dass es sich bei der Auffangeinrichtung um eine an ihrem einen Längsende oder an ihren beiden Längsenden offene Wanne handelt. Insbesondere ist vorgesehen, dass es sich bei deren Antrieb um einen Linearvibrationsförderantrieb handelt, von dem die Wanne getragen wird. Es besteht die Möglichkeit, dass die Bodenfläche der Wanne entlang der gesamten oder entlang eines Teils der in ihrer Transportrichtung gegebenen Länge in quer zu ihrer Transportrichtung angeordneten Querschnitten eben geformt ist und/oder dass deren Bodenoberfläche entlang der gesamten oder eines Teils der in ihrer Transportrichtung gegebenen Länge in quer zu ihrer Transportrichtung angeordneten Querschnitten geneigt, insbesondere konkav gerundet, geformt ist.

Vorzugsweise ist die Auffangeinrichtung tiefer liegend als die Tragstruktur angeordnet. Bei einer vorteilhaften Weiterbildung ist vorgesehen, dass die Höhendifferenz zwischen der Ordnungseinrichtung, insbesondere zwischen ihrer Teileführung für zu ordnende Teile, und einer Auffangoberfläche, insbesondere einem Wannenboden, der Auffangeinrichtung kleiner als 120 Millimeter ist und insbesondere im Wertebereich von 30 bis 50 Millimeter liegt.

Bevorzugt ist auch, dass die Ordnungseinrichtung und die Auffangeinrichtung schwingungsmäßig ganz oder teilweise voneinander entkoppelt sind, so dass im Betrieb an der Ordnungseinrichtung und an ihrem Antrieb auftretende Vibrationen nicht oder zumindest zu einem überwiegenden Anteil nicht auf die Auffangeinrichtung übertragen werden und insbesondere so dass etwaige im Betrieb an der Auffangeinrichtung und an ihrem Antrieb auftretende Vibrationen nicht oder zumindest zu einem überwiegenden Anteil nicht auf die Ordnungseinrichtung übertragen werden. Zu diesem Zweck kann bspw. vorgesehen sein, dass die Ordnungseinrichtung und die Auffangeinrichtung voneinander beabstandet auf einer gemeinsamen Basis, bei der es sich insbesondere um eine Grundplatte handelt, angeordnet sind und/oder dass der oder die mit der Ordnungseinrichtung zusammen wirkende Linearvibrationsförderantriebe von dem mit der Auffangeinrichtung zusammen wirkenden Antrieb beabstandet auf der Basis angeordnet sind und/oder dass die Ordnungseinrichtung von dem mit ihr zusammen wirkenden Linearvibrationsförderantrieb oder von den mit ihr zusammen wirkenden Linearvibrationsförderantrieben getragen wird und/ oder dass zwischen diesem Linearvibrationsförderantrieb oder diesen Linearvibrationsförderantrieben und der Basis jeweils gesonderte Feder- und/oder Dämpferelemente angebracht sind und/oder dass die Auffangeinrichtung von dem mit ihr zusammen wirkenden Antrieb getragen wird und/ oder dass zwischen diesem Antrieb und der Basis jeweils gesonderte Feder- und/oder Dämpferelemente angebracht sind.

Bevorzugt ist, dass jeder mit der Ordnungseinrichtung zu deren Vibrationsanregung verbundene Linearvibrationsförderantrieb zumindest folgende Komponenten umfasst: einen Schwinger und eine Gegenmasse, die mittels Federn relativ zueinander bewegbar angeordnet sind, sowie einen Vibrationsantrieb, mittels dem der Schwinger und die Gegenmasse entgegen der Federkraft der Federn relativ zueinander zu Vibrationen anregbar sind, wobei der Schwinger mit der Ordnungseinrichtung zu deren Vibrationsanregung geeignet mechanisch gekoppelt ist, insbesondere mittelbar durch Zwischenschaltung der Tragstruktur. Auch ist bevorzugt, dass der mit der Auffangeinrichtung zu deren Vibrationsanregung verbundene Linearvibrationsförderantrieb zumindest folgende Komponenten umfasst: einen Schwinger und eine Gegenmasse, die mittels Federn relativ zueinander bewegbar angeordnet sind, sowie einen Vibrationsantrieb, mittels dem der Schwinger und die Gegenmasse entgegen der Federkraft der Federn relativ zueinander zu Vibrationen anregbar sind, wobei der Schwinger mit der Auffangeinrichtung zu deren Vibrationsanregung geeignet mechanisch gekoppelt ist. Ein möglicher Aufbau der Linearvibrationsförderantriebe wird exemplarisch mit Bezug auf die Figuren beschrieben. Ergänzend wird Bezug auf den Inhalt der Offenlegungsschrift EP 0536502A1, insbesondere auf den dortigen Anspruch 1, genommen. Der dort beschriebene Vibrationsförderer könnte als Linearvibrationsförderantrieb dienen, wozu bspw. die in EP 0536502A1 beschriebene Befestigungsschiene 27 mit der Ordnungseinrichtung oder mit der Auffangeinrichtung verbunden würde. Ebenfalls beispielhaft wird auf den Inhalt von EP 0136446A1 Bezug genommen. Auch die dort, insbesondere in Anspruch 1, angegebenen Vibrationsförderer können im Rahmen der Erfindung als Linearvibrationsförderantriebe dienen, wenn bspw. der dort als Werkstück-Führungsbahn dienende Schwinger mit der Ordnungseinrichtung oder der Auffangeinrichtung verbunden wird. Für die Linearvibrationsförderantriebe eignet sich bspw. auch der in WO 2007/003570A1, insbesondere im dortigen Anspruch 1, angegebene Linearvibrationsförderer. In Betracht kommt bspw. auch der in EP 2578519A1, insbesondere im dortigen Anspruch 1, beschriebene Linearvibrationsförderer oder der bspw. in DE 102011054300A1, insbesondere im dortigen Anspruch 1, beschriebene Linearvibrationsförderer. Vorzugsweise handelt es sich bei den Federn, mittels denen der Schwinger und die Gegenmasse relativ zueinander beweglich angeordnet sind, um Biegefedern, vorzugsweise um Blattfedern. Zweckmäßig sind diese mit zueinander parallelen Biegeebenen angeordnet, so dass diese parallel zu der resultierenden Schwingungs- bzw. Vibrationsebene liegen. Vorzugsweise handelt es sich bei dem Vibrationsantrieb um einen elektromagnetischen Magnetantrieb, umfassend einen Elektromagnet und einen Anker, von denen der Elektromagnet vorzugsweise an der Gegenmasse und der Anker an dem Schwinger oder der Elektromagnet an dem Schwinger und der Anker an der Gegenmasse befestigt ist, wobei sich zumindest in einem unerregten Ruhezustand des Elektromagneten zwischen dem Elektromagnet und dem Anker ein Magnetspalt befindet. Zweckmäßigerweise ist die Ordnungseinrichtung mit dem jeweiligen, relativ zu seiner Gegenmasse und somit relativ zu der Basis bewegbaren Schwinger der ihr zugeordneten Linearvibrationsförderantriebe verbunden. Dadurch ist die Ordnungseinrichtung relativ zu Auffangeinrichtung bewegbar angeordnet bzw. gehalten, insbesondere entgegen der Kraft von Federn, die in dem oder den der Ordnungseinrichtung zugeordneten Linearvibrationsförderantrieben zwischen dem jeweiligen Schwinger und der Gegenmasse angeordnet sind. Insofern kann die Ordnungseinrichtung mittels Federn, mit anderen Worten entgegen Federkraft, relativ zu der Auffangeinrichtung bewegbar angeordnet sein.

Die Erfindung wird nachfolgend mit Bezug auf die Figuren, welche ein bevorzugtes Ausführungsbeispiel wiedergeben, weiter beschrieben. Darin zeigt:
- Fig. 1: perspektivisch ein erfindungsgemäßes Zuführsystem gemäß einem bevorzugten Ausführungsbeispiel, mit darin gestrichelt angedeuteten kleinen losen, d. h. beweglichen Teilen, die mittels des Zuführsystems einer ebenfalls gestrichelt angedeuteten gesonderten Einrichtung zuzuführen sind;
- Fig. 2: eine Seitenansicht der in Fig. 1 gezeigten Anordnung in dortiger Blickrichtung II, wobei zur Veranschaulichung Gehäuse teilweise transparent gezeigt sind;
- Fig. 3: eine Draufsicht in Blickrichtung III;
- Fig. 4: eine Stirnseitenansicht in Blickrichtung IV aus Fig. 1, d. h. entgegen der Zuführrichtung;
- Fig. 5: eine Explosionsansicht des in den Fig.1 - 4 gezeigten Zuführsystems, wobei eine rahmenartige Tragstruktur mit der darauf befestigten Ordnungseinrichtung in Vertikalrichtung nach dem Lösen von Verbindungen nach oben abgehoben wurde;
- Fig. 6: eine weitere Explosionsansicht des in den Fig. 1 - 4 gezeigten Zuführ-systems;
- Fig. 7: eine Schnittansicht entlang Schnittebene VII - VII gemäß Fig. 2;
- Fig. 8: eine Schnittansicht entlang Schnittebene VIII - VIII gemäß Fig. 3;
- Fig. 9: eine Schnittansicht entlang Schnittebene IX - IX gemäß Fig. 7 und
- Fig. 10: perspektivisch einen Schwingförderantrieb des in den Fig. 1 - 9 gezeigten Zuführsystems, bei abgenommenen Außengehäuse und im Vergleich zu den vorangehenden Figuren in Vergrößerung.

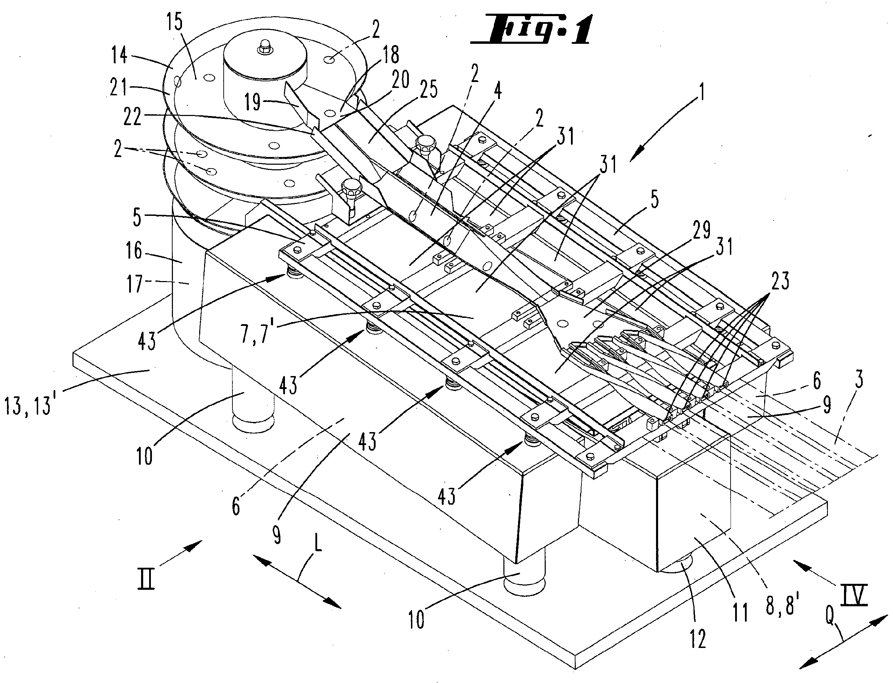

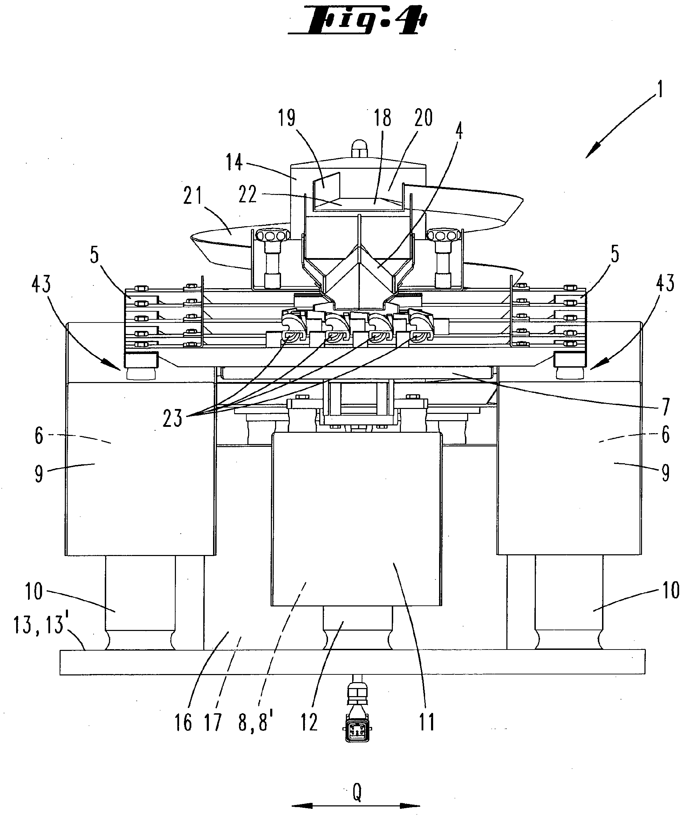

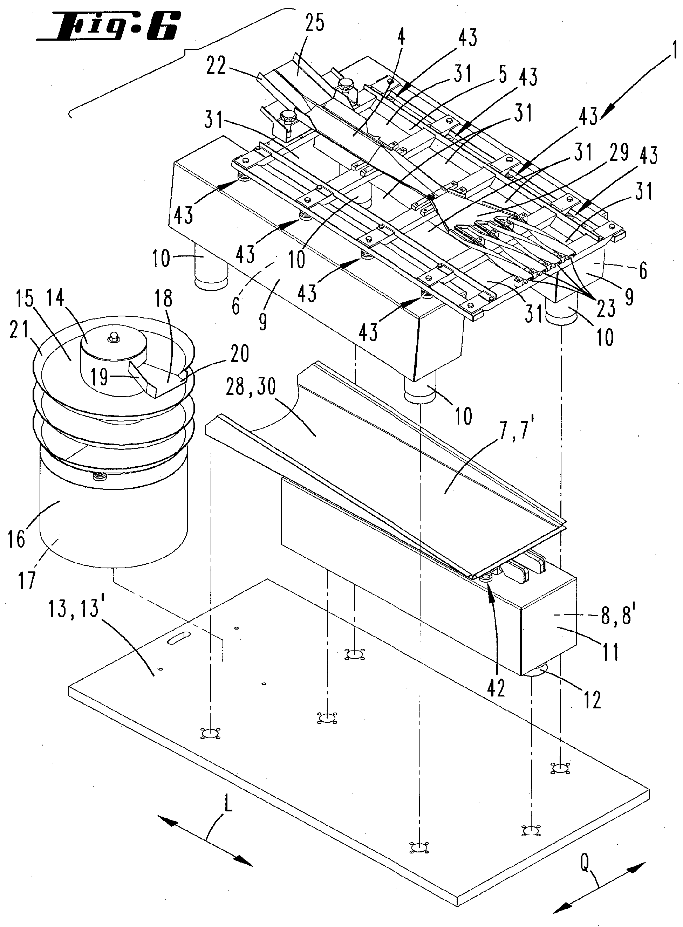

Mit Bezug auf die Figuren 1 bis 10 wird ein erfindungsgemäßes Zuführsystem 1 gemäß einem bevorzugten Ausführungsbeispiel vorgestellt. In Figur 1 sind zusätzlich gestrichelt kleine lose, bewegliche Teile 2 angedeutet, die nicht Bestandteil des Zuführsystems 1 sind, sondern die im Betrieb mittels des Zuführsystems 1 einer hiervon unabhängigen bzw. nachgeordneten Einrichtung 3, bei der es sich bspw. um eine Montage und/ oder Bestückungs- und/ oder Bearbeitungs- und/oder Verpackungseinrichtung handeln kann, zuzuführen sind. Die Teile 2 und die Einrichtung 3 sind in den nachfolgenden Figuren nicht mit angedeutet. Das Zuführsystem 1 umfasst in dem Beispiel eine Ordnungseinrichtung 4, die mittels einer rahmenartigen Tragstruktur 5 mit zwei zueinander baugleichen Linearvibrationsförderantrieben 6 mechanisch ausreichend steif gekoppelt ist, so dass im Betrieb Vibrationen von den Linearvibrationsförderantrieben 6 auf die Ordnungseinrichtung 4 übertragen werden, d. h. die Ordnungseinrichtung 4 ihrerseits zu Vibrationen angeregt wird. Mittels dieser Verbindung ist somit eine schwingungsmäßige Kopplung zwischen der Ordnungseinrichtung 4 und diesen beiden Linearvibrationsförderantrieben 6 realisiert. Des Weiteren umfasst das Zuführsystem 1 eine Auffangeinrichtung 7, die sich tiefer liegend als die Ordnungseinrichtung 4 erstreckt. Wie bspw. Figur 6 veranschaulicht, handelt es sich in dem Beispiel, d. h. nicht notwendig, bei der Auffangeinrichtung 7 um eine an ihrem einen Längsende offene Wanne 7'. Diese ist an ihrer Unterseite mittels geeigneten Befestigungsmitteln mit einem nur ihr zum Antrieb zugeordneten Antrieb 8 verbunden, bei dem es sich in dem Beispiel um einen zu den beiden der Ordnungseinrichtung 4 um Antrieb zugeordneten Linearvibrationsförderantrieben 6 im Wesentlichen baugleichen Linearvibrationsförderantrieb 8' handelt. Die mechanische Kopplung zwischen der Auffangeinrichtung 7 und dem Linearvibrationsförderantrieb 8' ist ausreichend steif, um von dem Linearvibrationsförderantrieb 8' erzeugte Vibrationen auf die Auffangeinrichtung 7 zu übertragen, d. h. um diese bzw. die Wanne 7' zu Vibrationen anzuregen. Jeder Linearvibrationsförderantrieb 6 ist innerhalb eines Gehäuses 9 angeordnet, das mittels steifen Stützen 10, die bspw. aus Metall hergestellt sein können, auf einer als Basis 13 dienenden Grundplatte 13' befestigt ist. Wie noch näher beschrieben wird, befindet sich in jedem Gehäuse 9 ein Schwinger 35, der im Betrieb Vibrationsbewegungen ausführt und der durch ausreichend groß bemessene Öffnungen in der Gehäuseoberseite mechanisch steif mit der Tragstruktur 5 verbunden ist, so dass die Tragstruktur 7 und demzufolge die mit ihr verbundene Ordnungseinrichtung 4 ihrerseits zu Vibrationen angeregt werden. Das Gehäuse 11 ist mit steifen, bspw. aus Metall hergestellten, Stützen 12 auf der Basis 13 befestigt. In dem Beispiel befindet sich im Inneren des Gehäuses 11 ein Schwinger, der nur vereinfachend ebenfalls mit 35 bezeichnet ist, der im Betrieb des Linearvibrationsförderantriebs 8' Vibrationsbewegungen ausführt und der durch ausreichend groß bemessene Öffnungen in der Oberseite des Gehäuses 11 mit der Auffangeinrichtung 7, d. h. mit der Wanne 7', mechanisch steif verbunden ist, so dass im Betrieb auch die Wanne 7' zu Vibrationen angeregt wird. Das Zuführsystem 1 umfasst in dem Beispiel auch einen Schwingförderer 14, der eine helixförmige Förderstrecke 15 aufweist. Unterhalb der Förderstrecke 15 befindet sich ein Gehäuse 16, das auf der Basis 13 befestigt ist und in dessen Innerem sich ein Schwingförderantrieb 17 befindet.

Wie noch beschrieben wird, führt dessen Schwinger 44 im Betrieb Vibrationsbewegungen aus und ist durch ausreichend groß bemessene Öffnungen in der Oberseite des Gehäuses 16 mechanisch ausreichend steif mit der Förderstrecke 15 verbunden, so dass diese im Betrieb ihrerseits in Vibrationen versetzt wird.

Aus der Beschreibung wird deutlich, dass die von den Schwingern der Linearvibrationsförderantriebe 6 getragene Ordnungseinrichtung 4 relativ zu der Auffangeinrichtung 7 bewegbar angeordnet ist, so dass die Ordnungseinrichtung 4 im Betrieb mittels der beiden Linearvibrationsförderantriebe 6 zu Vibrationsbewegungen relativ zu der Auffangeinrichtung 7 anregbar ist. Um ein gewünschtes Bewegungsspiel relativ zueinander zu erlauben, sind die Ordnungseinrichtung 4 mit ihrer mitschwingenden Tragstruktur 5 einerseits und die Auffangeinrichtung 7 andererseits in dazu ausreichendem Abstand voneinander angeordnet. Die Ordnungseinrichtung 4 ist auf der Basis 13 aufgrund der beiden mechanisch zwischengeschalteten Linearvibrationsförderantriebe 6 schwingfähig abgestützt, d. h. sie ist schwingungsmäßig von der Basis 13 entkoppelt. Ebenso ist die Auffangeinrichtung 7 auf der Basis 13 aufgrund des mechanisch dazwischen geschalteten Linearvibrationsförderantriebs 8' schwingfähig abgestützt. Zwischen der Ordnungseinrichtung 4 und der 'Auffangeinrichtung 7 besteht keine direkte steife Schwingungen relativ zueinander verhindernde Verbindung. Die Ordnungseinrichtung 4 ist an dem Zuführsystem 1 relativ zu der Auffangeinrichtung 7 schwingfähig gehalten, d. h. mit anderen Worten von der Auffangeinrichtung 7 schwingungsentkoppelt. In dem Beispiel ist außerdem die Auffangeinrichtung 7 an dem Zuführsystem 1 relativ zu der Ordnungseinrichtung 4 schwingfähig gehalten.

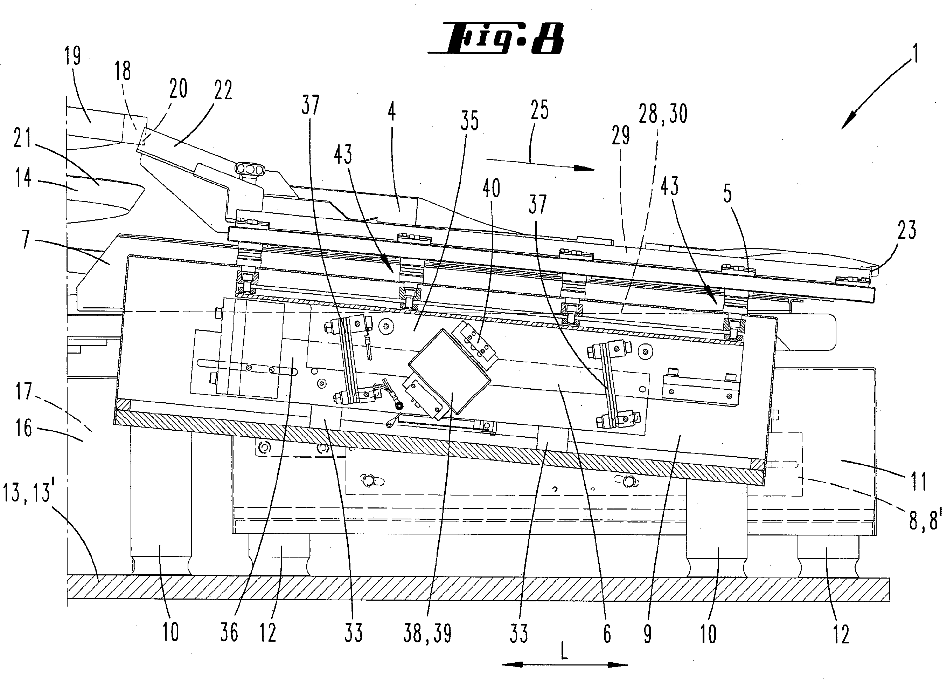

Die beiden jeweils mechanisch mit der Ordnungseinrichtung 4 zur Übertragung von Vibrationen gekoppelten Linearvibrationsförderantriebe 6 sind seitlich voneinander beabstandet. Ihre jeweiligen Schwingungsebenen erstrecken sich parallel zu der Zeichenebene von Figur 8, d. h. beide Schwingungsebenen erstrecken sich parallel zueinander. Hinsichtlich dieser Schwingungsebenen ist die Beabstandung der beiden Linearvibrationsförderantriebe 6 in einer dazu senkrechten Richtung gegeben. Im Gegensatz zu einem Zuführsystem, bei dem die Ordnungseinrichtung durch nur einen mittig unter ihr angeordneten Linearvibrationsförderantrieb angeregt wird, könnte man bei der in den Figuren gezeigten, voneinander seitlich beabstandeten Anordnung der beiden Linearvibrationsförderantriebe 6 von einer katamaranartigen Anordnung sprechen.

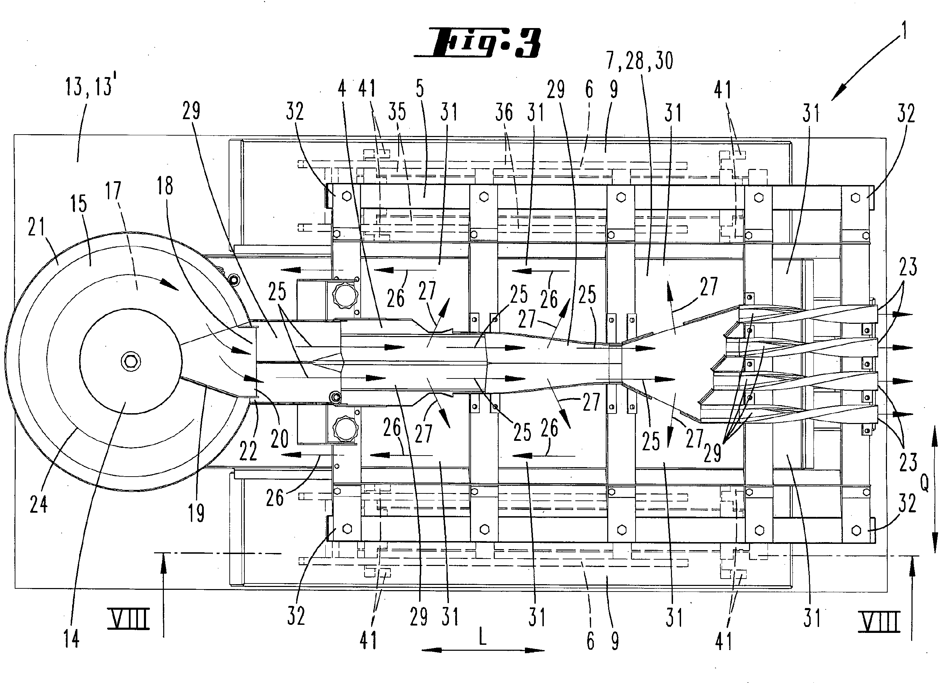

Im Betrieb des als Ausführungsbeispiel beschriebenen Zuführsystems 1 führen dessen Ordnungseinrichtung 4, Auffangeinrichtung 7 und Förderstrecke 15 voneinander unabhängige Vibrationsbewegungen aus. Diese Vibrationen sind so orientiert, dass sie auf den vibrierenden Komponenten befindliche, von dem Zuführsystem einer nachgeordneten Einrichtung 3 zuzuführende kleine lose Teile 2 in Mikro-Wurfbewegungen versetzen, die zufolge ihrer horizontalen Komponente eine Bewegung der Teile 2 in eine gewünschte Richtung bewirken. Diese für die verschiedenen voneinander unabhängig schwingenden Komponenten des Zuführsystems 1 unterschiedlichen Richtungen sind in Figur 3 schematisch durch Pfeile angedeutet. Auf der helixförmigen Förderstrecken 15 befindliche Teile 2 werden zufolge der Vibrationen der Förderstrecke 15 in einer im Uhrzeigersinn verlaufenden Kreisbewegung, d. h. in der helixförmigen Förderstrecke 15 aufwärts, transportiert. Diese Förderrichtung 24 ist durch den Pfeil mit dem entsprechenden Bezugszeichen angegeben. Am oberen Ende gelangen die beweglichen Teile 2 (vgl. auch Figur 1) durch einen Auslass 18, der einen in Radialrichtung orientierten Anschlag 19 und eine davor liegende Öffnung 20 in der in Umfangsrichtung verlaufenden Seitenwand 21 aufweist, zu einem Eintritt 22 der Ordnungseinrichtung 4, die sich bis zu einem Austritt 23 erstreckt. Anstelle von Eintritt 22 und Austritt 23 könnte man auch von Eintrittsquerschnitt 22 und von Austrittsquerschnitt 23 sprechen. Auf der Ordnungseinrichtung 4 befindliche Teile 2 werden zufolge der Vibrationsbewegungen überwiegend in der durch die Pfeile mit dem Bezugszeichen 25 angegebene Zuführrichtung bewegt, also parallel zu einer Längsrichtung L des Zuführsystems 1. Auch wenn, bspw. im Bereich der im Beispiel an der Ordnungseinrichtung 4 vorhandenen Verzweigung auf vier Bahnen, auch eine gewisse Bewegung quer dazu erfolgt, handelt es sich bei der von den Pfeilen angegebenen Zuführrichtung 25 um die von den Vibrationsebenen vorgegebene und somit überwiegende Bewegungsrichtung. Hingegen ist bei dem Ausführungsbeispiel der Linearvibrationsförderantrieb 8' so beschaffen, dass auf der Auffangeinrichtung 7 befindliche Teile 2 im Betrieb in die von den Pfeilen mit dem Bezugszeichen 26 angegebene Transportrichtung befördert werden, die entgegengesetzt zu der Förderrichtung 25 verläuft. Selbst wenn auf der Auffangeinrichtung 7 befindliche Teile 2 auch begrenzte quer zu der Längsrichtung L (d. h. parallel zu einer Querrichtung Q des Zuführsystems 1) orientierte Bewegungen ausführen, handelt es sich bei der Transportrichtung 26 um die zu der Schwingungsebene des Linearvibrationsförderantriebs 8' parallele und daher überwiegende Bewegungsrichtung. Die mit dem Bezugszeichen 27 versehenen Pfeile deuten schematisch und lediglich exemplarisch Richtungen an, in denen Teile 2, die bspw. bestimmte von der Ordnungseinrichtung 4 vorgegebene Lagekriterien, Sortiermerkmale oder dergleichen nicht erfüllen, seitlich von der Ordnungseinrichtung 4 fallen. Solche Teile 2 werden von der tiefer liegenden, sich also zwischen der Ordnungseinrichtung 4 und der Basis 13, erstreckenden Auffangeinrichtung 7 aufgefangen, indem sie auf ihre Auffangoberfläche 28 auftreffen. Von der Auffangeinrichtung 7 bzw. der Wanne 7' werden solche Teile 2 in der Transportrichtung 26 abtransportiert, bis sie an dem der helixförmigen Förderstrecke 15 zuweisenden, offenen Längsende der Wanne 7' durch die dort vorhandene Öffnung in eine untere Windung der helixförmigen Förderstrecke 15 eintreten. Von dort werden die Teile 2 in der Förderrichtung 24 nach oben befördert, wo sie erneut der Ordnungseinrichtung 4 zugeführt werden. Im Betrieb gelangen nur Teile 2 bis zum Austritt 23 der Ordnungseinrichtung 4, die alle Kriterien der Ordnungseinrichtung 4, bspw. hinsichtlich ihrer Geometrie, Größe, Lage oder dergleichen, erfüllen, während die übrigen Teile 2 von der Auffangeinrichtung 7 platzsparend abtransportiert und mittels des Schwingförderers 14 der Ordnungseinrichtung erneut zugeführt werden. Das erfindungsgemäße Zuführsystem 1 ermöglicht, dass die Zuführrichtung 25 und die Transportrichtung 26 entgegengesetzt zueinander verlaufen, so dass sich eine besonders platzsparende Rückführung von herabfallenden Teilen 2 erreichen lässt. Die Auffangeinrichtung 7 erfüllt somit vorteilhaft eine Doppelfunktion: einerseits dient sie zum Auffangen von von der Ordnungseinrichtung fallenden Teilen 2, und andererseits dient sie zu deren Abtransport, im Beispiel in zu der Zuführrichtung entgegengesetzter Richtung oder alternativ in eine beliebige andere Richtung. Die Auffangeinrichtung 7 könnte man daher auch als Abtransporteinrichtung bezeichnen. Wird die Transportrichtung entgegengesetzt zu der Zuführrichtung gewählt, kann für den zur Zuführrichtung entgegengesetzten Rücktransport auf zusätzliche Einrichtungen verzichtet werden. Im Beispiel ist an dem von der helixförmigen Förderstrecke 15 weggerichteten Längsende der Wanne 7' eine quer zur Transportrichtung 26 orientierte Wandung vorgesehen, d. h. das Längsende der Wanne 7' ist insofern geschlossen.

Die Teileführung 29 der Ordnungseinrichtung 4, d. h. die im Betrieb zur Führung und/ oder in weitem Sinne zur Beeinflussung von Lage und/ oder Ausrichtung der sich bewegenden Teile 2 zwischen dem Eintritt 22 und dem Austritt 23 dienenden Oberflächenbereiche der Ordnungseinrichtung 4, ist für das Ausführungsbeispiel insbesondere aus den Figuren 1 und 3 gut zu entnehmen, wobei das Bezugszeichen 29 nur stellvertretend an einzelnen Positionen angegeben ist. In an sich bekannter Weise umfasst die Teileführung 29 verschiedene Abschnitte, in denen die exemplarisch gezeigten Teile 2 in der Zuführrichtung 25 bewegt werden, wobei sog. Schikanen eingebaut sind, die bspw. bei Abweichungen von einer vorgegebenen Ausrichtung von Teilen 2 oder bei Abweichungen von anderen Sortiermerkmalen zum Herabfallen solcher Teile 2 von der Ordnungseinrichtung 4 führen. Solche sog. Schikanen und Sortiermerkmale sind an sich bekannt, so dass im Rahmen der vorliegenden Beschreibung nicht näher darauf eingegangen werden muss. Auch versteht sich insofern, dass die Ordnungseinrichtung 4 bzw. Teileführung 29 von dem in den Figuren gezeigten Beispiel abweichen kann.

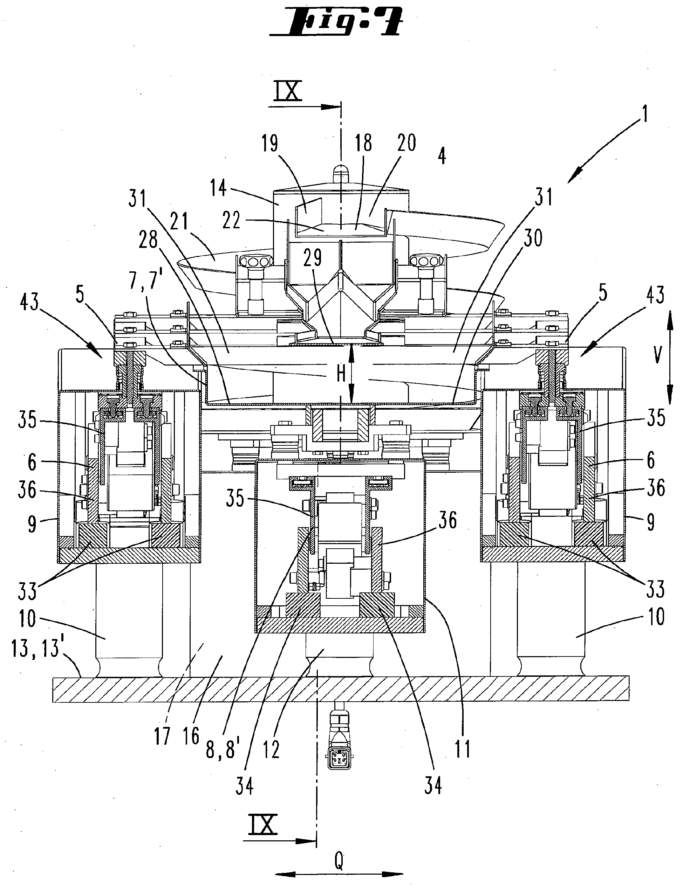

Im Beispiel, d. h. nicht notwendig, handelt es sich bei der Auffangeinrichtung 7 um eine an ihrem einen der beiden in Bezug auf die Transportrichtung 26 gebildeten Längsenden offene Wanne 7', die von ihrem Antrieb 8 getragen wird. Wie Figur 6 für das Beispiel zeigt, bildet ihr Boden eine Auffangoberfläche 30 zum Auffangen der im Betrieb von der Ordnungseinrichtung 4 herabfallenden Teile 2. In Richtung quer zu der Transportrichtung 26, also in parallel zu der Querrichtung Q orientierten Breitenrichtung der Auffangeinrichtung 7 besitzt diese eine größere Erstreckung als die Ordnungseinrichtung 4. Die Wanne 7' weist seitlich Begrenzungswände auf. Die Auffangoberfläche 30 erstreckt sich tieferliegend als die Teileführung 29 der Ordnungseinrichtung 4, also zwischen der Aufstellebene des Zuführsystems 1 und der Teileführung 29, wobei in Querrichtung zu der Zuführrichtung 25 bzw. der Transportrichtung 26 eine mittige Ausrichtung gewählt ist. Die Auffangoberfläche 30 erstreckt sich somit in ihrem besagten tiefer liegenden Verlauf sowohl unterhalb (also in Vertikalrichtung darunter) als auch, bezogen auf eine vertikale Projektionsbetrachtung, seitlich angrenzend zu der Teileführung 29. Somit werden auch Teile 2, die mit einer gewissen Quergeschwindigkeit von der Ordnungseinrichtung 4 herabfallen, noch von der Auffangeinrichtung 7 aufgefangen. Diese mittige Anordnung zeigt bspw. Figur 7 und außerdem, dass der Antrieb 8 in zu der Transportrichtung 26 quer orientierten Querschnitten tiefer liegend als die Auffangeinrichtung 7, in dem Beispiel mittig unterhalb, der Auffangeinrichtung 7 angeordnet ist. In einer vertikalen Projektionsbetrachtung, d. h. in Blickrichtung von Figur 3, sind die Auffangeinrichtung 7 und der mit ihr verbundene Antrieb 8 zwischen den beiden mit der Ordnungseinrichtung 4 zu deren Vibrationsantrieb gekoppelten Linearvibrationsförderantrieben 6 angeordnet. Wie Figur 7 zeigt, erstreckt sich die von dem Boden der Auffangeinrichtung 7 gebildete Auffangoberfläche 28 auch räumlich (unter Einbezug der Vertikalrichtung) betrachtet in dem Zwischenraum zwischen den beiden mit der Ordnungseinrichtung 4 verbundenen Linearvibrationsförderantrieben 6. In dieser räumlichen Betrachtung befindet sich der Antrieb 8 in seinem oberen Bereich, d. h. teilweise, in dem Zwischenraum zwischen den beiden Linearvibrationsförderantrieben 6.

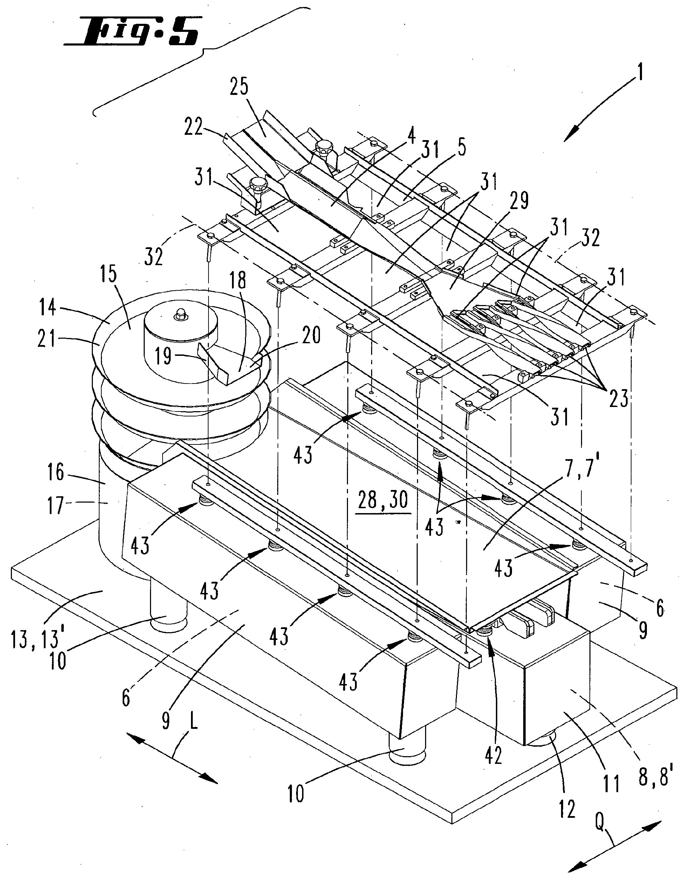

In einer zu Figur 3 senkrechten (also vertikalen) Projektionsbetrachtung ist die Ordnungseinrichtung 4 bezogen auf die Querrichtung Q, die sich senkrecht zu der Zuführrichtung 25 erstreckt, mittig zwischen den beiden Linearvibrationsförderantrieben 6 angeordnet. Die Ordnungseinrichtung 4 ist auf der rahmenartigen Tragstruktur 5 befestigt. Figur 5 zeigt, dass die mehrere, miteinander fest verbundene Längsträger und Querträger umfassende, gitterartige Tragstruktur 5 mehrere von ihrer Oberseite zu ihrer Unterseite durchgehende Ausnehmungen 31 aufweist, durch welche von der Ordnungseinrichtung 4 fallende Teile 2 in Richtung zu der Auffangeinrichtung 7 hindurchfallen können. An den beiden bezüglich der mittig angeordneten Ordnungseinrichtung 4 seitlichen Rändern 32 der Tragstruktur 5 ist unterseitig je einer der beiden tiefer als die Tragstruktur 5 angeordneten Linearvibrationsförderantriebe 6 befestigt. Die Auffangeinrichtung 7 und der mit ihr verbundene Antrieb 8 sind tiefer liegend als die 'Tragstruktur 5 angeordnet.

In dem in Figur 7 gezeigten Querschnitt bezeichnet H eine Höhendifferenz zwischen der Teileführung 29 der Ordnungseinrichtung 4 und der Auffangoberfläche 28. In dem Beispiel ist die Höhendifferenz H kleiner als 120 Millimeter. Sie beträgt vorzugsweise 30 bis 50 Millimeter, kann aber auch andere Werte annehmen. Vorzugsweise beträgt die Höhendifferenz zwischen der Ordnungseinrichtung 4, insbesondere ihrer Teileführung 28, und der Auffangoberfläche 28 in jedem der zu der Zuführrichtung 25 senkrechten Querschnitte, durch die sich die Teileführung 28 und die Auffangoberfläche 28 erstrecken, weniger als 120 Millimeter, vorzugsweise 30 bis 50 Millimeter. Figur 7 zeigt auch, dass die Auffangeinrichtung 7 und der mit ihr verbundene Antrieb 8 seitlich von den mit der Ordnungseinrichtung 4 gekoppelten Linearvibrationsförderantrieben 6 beabstandet sind. Jeder Linearvibrationsförderantrieb 6 ruht in seinem Gehäuse 9 auf in dem Beispiel aus Gummi hergestellten Elementen 33, die einer Übertragung von Vibrationen auf die Unterseite des Gehäuses 9 entgegenwirken. Die Elemente 33 sind somit zwischen den Linearvibrationsförderantrieben 6 und der Basis 13 bzw. Grundplatte 13' angeordnet und wirken der Übertragung von Vibrationen auf die Grundplatte 13' entgegen. Bei dem Antrieb 8 sind in entsprechender Weise gesonderte, in dem Beispiel ebenfalls aus Gummi hergestellte Elemente 34 vorgesehen.

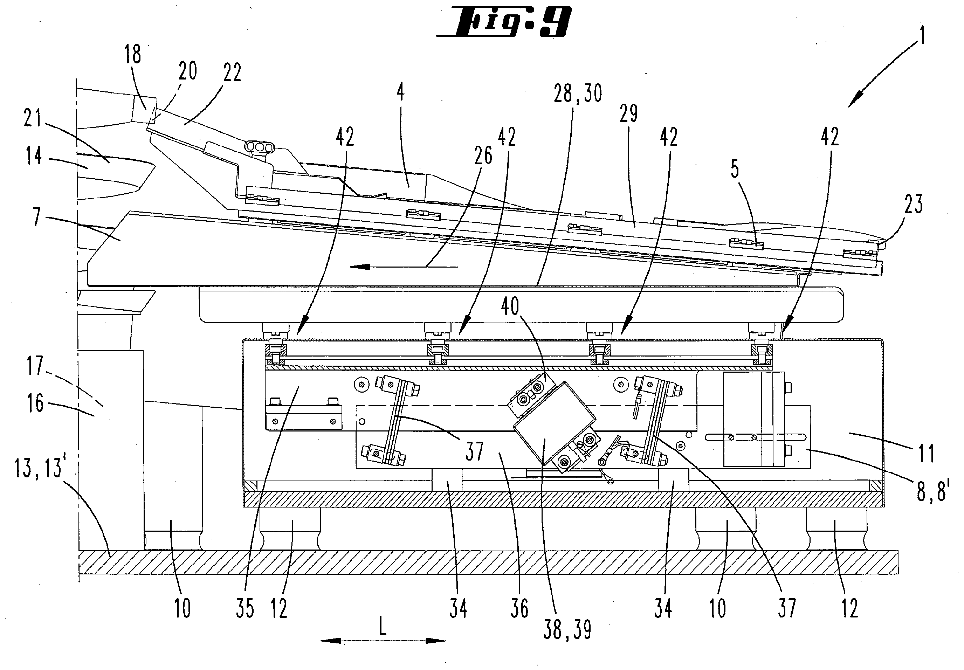

Mit Bezug auf die Figuren 8 und 9 wird für das gewählte Ausführungsbeispiel ein möglicher Aufbau der beiden Linearvibrationsförderantriebe 6 und des Linearvibrationsförderantriebs 8' vorgestellt. Es versteht sich, dass jeweils auch Linearvibrationsförderantriebe mit hiervon abweichendem Aufbau Verwendung finden können. Hinsichtlich des Antriebes 8 für die Auffangeinrichtung 7 kann bspw. auch ein von einem Vibrationsantrieb abweichendes Antriebsprinzip Verwendung finden; bspw. könnte dort, wenn es sich bei der Auffangeinrichtung bspw. um ein Fließband handelt, bspw. ein Elektromotor eingesetzt werden. Je nach Ausgestaltung wäre sogar denkbar, bei der Auffangeinrichtung 7 gänzlich auf einen Antrieb zu verzichten.

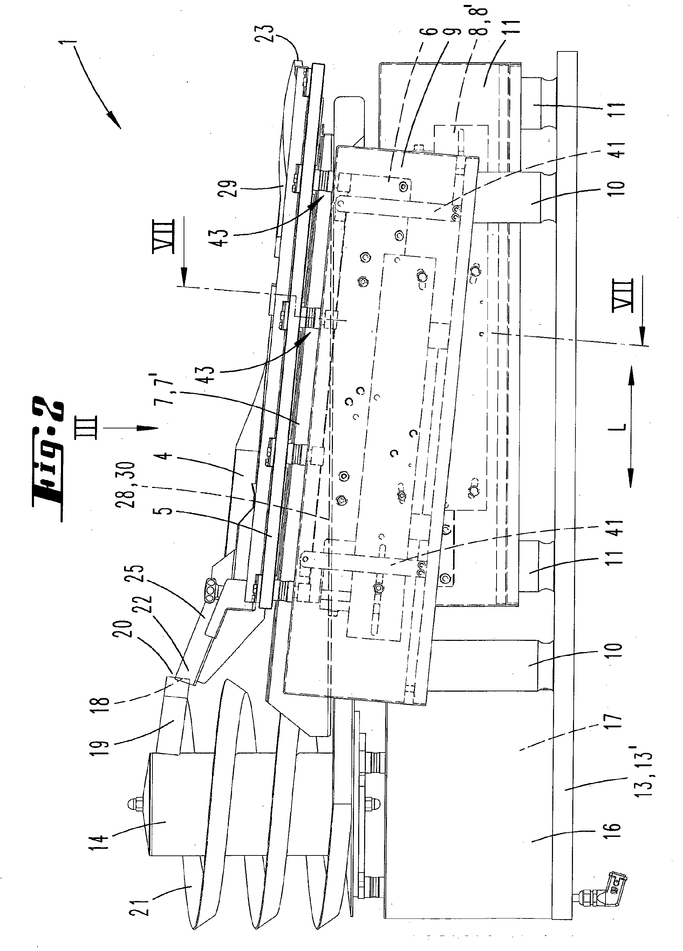

Für das Beispiel zeigt Figur 9, dass jeder der beiden zueinander baugleichen Linearvibrationsförderantriebe 6 einen Schwinger 36 und eine Gegenmasse 36 aufweist, die mittels Federn 37 relativ zueinander bewegbar gehalten bzw. angeordnet sind. Die Gegenmasse 36 umfasst zwei längliche, miteinander verbundene Platten, die seitlich überlappend von zwei miteinander verbundenen Platten des Schwingers 35 umgriffen werden. Als Federn 37 sind Blattfedern vorgesehen. Die Federn 37 sind zu zwei Federstapeln zusammengefasst, die in einer zu der Zuführrichtung 25 parallelen Richtung voneinander beabstandet angeordnet sind. Jeder Federstapel ist an seinem oberen Ende mit dem Schwinger 35 und an seinem unteren Ende mit der Gegenmasse 36 verbunden. Die Gegenmasse 36 ruht auf den Elementen 33 auf der Unterseite des Gehäuses 9. Jeder Linearvibrationsförderantrieb 6 umfasst einen Vibrationsantrieb 38. Bei diesem handelt es sich um einen elektromagnetischen Magnetantrieb, dessen Elektromagnet 39 an der Gegenmasse 36 und dessen Anker 40 an dem Schwinger 35 befestigt ist, so dass sich im Ruhezustand, in welchem der Elektromagnet nicht erregt ist, ein kleiner Luftspalt zwischen dem Elektromagnet 39 und dem Anker 40 befindet. Wird im Betrieb an den Elektromagnet 39 eine elektrische Wechselspannung angelegt, bewirkt dies eine periodische Anziehung des Ankers 40, wodurch der Schwinger 35 und die Gegenmasse 36 relativ zueinander periodisch Bewegungen ausführen. Die Ebene der Blattfedern ist senkrecht zur Vibrationsebene bzw. zu der Zeichenebene von Figur 8 orientiert. Durch die Ausrichtung der aus Blattfedern gebildeten Federpakete ist vorgegeben, dass die Bewegungen parallel zu der Zeichenebene von Figur 8 verlaufen. Die Darstellung zeigt auch, dass die flachen Federn 37 innerhalb der Bewegungsebene ausgehend von einer gedachten, zu dem Boden des Gehäuses 9 lotrechten Bezugslinie um einen spitzen Winkel entgegen dem Uhrzeigersinn verdreht angeordnet sind. Innerhalb der Schwingungsebene (vgl. Figur 8) ist in Bezug auf die Zuführrichtung 25 bzw. in Parallelrichtung zur Längsrichtung L bei den jeweiligen Federn 37 bzw. Federpaketen das an dem Schwinger 35 befestigte Ende näher an dem Eintritt 22 der Ordnungseinrichtung 4 als das jeweils an der Gegenmasse 36 befestigte Ende der Federn 37 bzw. der Federpakete. Zufolge dieser Neigung besitzt im Betrieb die Mikrowurfbewegung der Teile 2 richtungsmäßig eine Komponente in Richtung von dem Eintritt 22 zu dem Austritt 23. In dem Beispiel wird die Förderbewegung dadurch unterstützt, dass die Ordnungseinrichtung 4 in dieser Bewegungsrichtung ein Gefälle aufweist, d. h. geneigt auf der Basis angeordnet ist. Um zu gewährleisten, dass trotz der aus Gummi hergestellten Elemente 33 die Schwingungsebene parallel zu der Zeichenebene der Figuren 2 und 8 liegt, weisen die Linearvibrationsförderantriebe 6 mit dem Gehäuse 9 verbundene Führungslaschen 41 auf, die den Schwinger 35 unter Zulassung einer Relativbewegung seitlich führen. Der Schwinger 35 ist mittels zur Übertragung von Vibrationen ausreichend steifer, insgesamt als 43 bezeichneten Verbindungsmitteln an der Tragstruktur 5 befestigt. Diese Verbindungsmittel umfassen an der Oberseite des Schwingers 35 ausgebildete, nach oben offene und im Querschnitt hinterschnittene Nuten, in die Kulissensteine eingesetzt sind. Darin greifen Befestigungsschrauben zwecks Befestigung einer die Profile des Schwingers 35 oberseitig miteinander verbindenden Platte. Diese wiederum ist mittels einer ebenfalls starren Schraubverbindung durch Öffnungen im Deckel des Gehäuses 9 mit der Tragstruktur 5 steif verbunden.

In dem Beispiel, d. h. nicht notwendig, ist, um die Auffangseinrichtung 7 bzw. die Wanne 7' ebenfalls und von der Ordnungseinrichtung 4 unabhängig zu Vibrationen anzuregen, ein zusätzlicher Linearvibrationsförderantrieb 8' vorgesehen. Dieser ist in der Schnittansicht von Figur 9 gezeigt und besitzt im Beispiel den prinzipiell gleichen Aufbau wie die beiden Linearvibrationsförderantriebe 6. Vereinfachend sind daher dessen Komponenten (abgesehen von den Elementen 33, 34) mit den gleichen Bezugszeichen wie bei den Linearvibrationsförderantrieben 6 bezeichnet. Auch die Funktionsweise ist prinzipiell die gleiche. Die Schwingungsebene des Schwingers 35 und der Gegenmasse 36 verläuft dort parallel zu der Schwingungsebene von Schwinger 35 und Gegenmasse 36 der Linearvibrationsförderantriebe 6. Allerdings ist die Einbaulage so gewählt, dass in der Schwingungsebene die mit dem Schwinger 35 verbundenen Enden der Federn 37 bzw. der Federpakete in Bezug auf die Transportrichtung 26 näher an dem Austritt 23 als an dem Eintritt 22 der Ordnungseinrichtung 4 angeordnet sind. Im Betrieb besitzt daher die Mikrowurfbewegung der Teile 2 eine Komponente, die in Richtung von dem Austritt 23 zu dem Eintritt 22 weist. Würde man die Neigung der Federn 37 in Bezug auf eine gedachte senkrechte Bezugslinie umkehren, ergäbe sich eine hierzu entgegengesetzte Transportrichtung. In dem Beispiel ist der Linearvibrationsförderantrieb 8' horizontal angeordnet; es wäre aber zur Unterstützung der Transportwirkung auch eine geneigte Befestigung auf der Basis 13 möglich. Der Schwinger 35 ist mittels zur Übertragung von Vibrationen ausreichend steifen, insgesamt mit 42 bezeichneten Verbindungsmitteln mit der Auffangeinrichtung 7 verbunden. Die Längsprofile des Schwingers 35 sind oberseitig starr mittels einer Platte verbunden, die ihrerseits durch Öffnungen in der Oberseite von Gehäuse 11 mittels starrer Schraubverbindung mit einer Tragplatte verbunden ist. Auf dieser stützt sich wiederum steif die Auffangeinrichtung 7 ab.

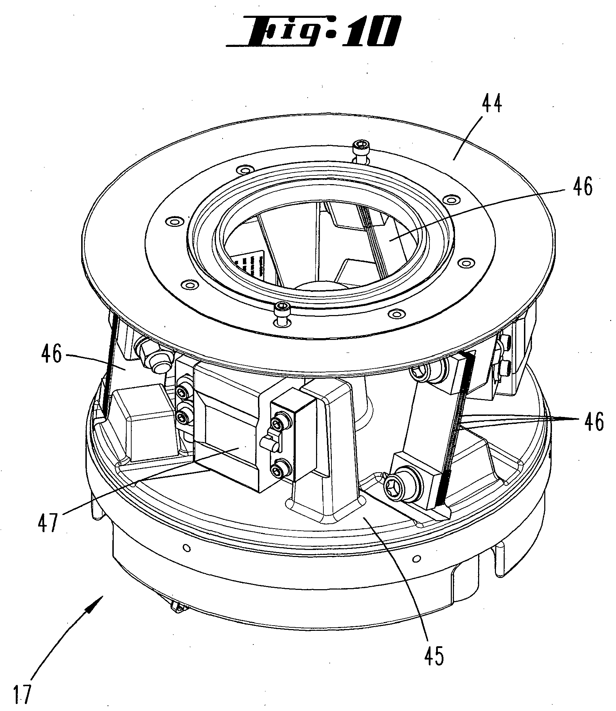

Figur 10 zeigt, im Vergleich zu vorangehenden Figuren in Vergrößerung, den in dem Beispiel vorgesehenen Schwingförderantrieb 17. Dieser umfasst einen Schwinger 44 und eine Gegenmasse 45, die jeweils kreisförmigen Grundriss besitzen. Entlang des Randes sind mehrere, in Umfangsrichtung voneinander beabstandete Pakete aus flachen Federn 46 angeordnet. Diese sind an ihrem oberen Ende mit dem Schwinger 44 und an ihrem unteren Ende mit der Gegenmasse 45 verbunden und in Bezug auf eine jeweilige, zu der Kreisebene senkrechte gedachte Bezugslinie jeweils in Umfangsrichtung geneigt. Mittels eines Vibrationsantriebes 47, der wiederum einen Elektromagnet und einen Anker umfasst, werden der Schwinger 44 und die Gegenmasse 45 im Betrieb relativ zueinander zu Vibrationen angeregt. Der Schwinger 44 ist zur Übertragung der Vibrationen steif mit der helixförmigen Förderstrecke 15 verbunden. Die Vibrationen bewirken eine Mikrowurfbewegung von Teilen 2 entlang der Förderstrecke 15 in aufsteigender Richtung.

## Patentansprüche

1. Zuführsystem (1), insbesondere für die Zuführung von Teilen (2) zu einer Montage- und/oder Bestückung- und/oder Bearbeitungs- und/oder Verpackungseinrichtung (3) oder dergleichen, wobei das Zuführsystem (1) umfasst: zumindest eine Ordnungseinrichtung (4), insbesondere zum Transport und/oder Vereinzeln und/oder Sortieren und/ oder Ausrichten und/oder Verteilen von Teilen (2), und zumindest eine Auffangeinrichtung (7) zum Auffangen und insbesondere zum Abtransport von im Betrieb von der Ordnungseinrichtung (4) fallenden Teilen (2), wobei das Zuführsystem (1) zumindest zwei, insbesondere zueinander baugleiche, Linearvibrationsförderantriebe (6) umfasst, die mit der Ordnungseinrichtung (4) gekoppelt sind, wobei diese Linearvibrationsförderantriebe (6) voneinander beabstandet, insbesondere mit parallel zueinander orientierten Vibrationsebenen, angeordnet sind, **dadurch gekennzeichnet, dass** die Ordnungseinrichtung (4) an einer, insbesondere rahmenartigen, Tragstruktur (5), welche eine oder mehrere von ihrer Oberseite zu ihrer Unterseite durchgehende Ausnehmungen (31) aufweist, befestigt ist und oberhalb der Tragstruktur (5) angeordnet ist, wobei an der Tragstruktur (5) an oder im Bereich ihrer beiden bezüglich der Ordnungseinrichtting (4) seitlichen Ränder (32) je einer der Linearvibrationsförderantriebe (6) befestigt und tiefer als die Tragstruktur (5) angeordnet ist.

2. Zuführsystem nach Anspruch 1, **dadurch gekennzeichnet, dass** die Ordnungseinrichtung (4) relativ zu der Auffangeinrichtung (7) bewegbar angeordnet ist, so dass die Ordnungseinrichtung (4) im Betrieb mittels der Linearvibrationsförderantriebe (6) zu Vibrationsbewegungen relativ zu der Auffangeinrichtung (7) anregbar ist.

3. Zuführsystem (1) nach einem der vorangehenden Ansprüche, **dadurch gekennzeichnet, dass** die Ordnungseinrichtung (4) zumindest eine Teileführung (29) umfasst und dass sich die Auffangeinrichtung (7) zum Auffangen von im Betrieb von der Ordnungseinrichtung (4) herabfallenden Teilen (2) ganz oder teilweise, insbesondere zumindest eine der Auffangeinrichtung (7) zugehörige Auffangoberfläche (30) zum Auffangen von im Betrieb von der Ordnungseinrichtung (4) herabfallenden Teile (2), tiefer liegend als die Teileführung (29) der Ordnungseinrichtung (4), insbesondere unterhalb und/ oder seitlich der Teileführung (29), erstreckt.

4. Zuführsystem (1) nach einem der vorangehenden Ansprüche, **dadurch gekennzeichnet, dass** das Zuführsystem (1) zumindest einen Antrieb (8) aufweist, mittels dem zumindest eine der Auffangeinrichtung (7) zugehörige, im Betrieb von der Ordnungseinrichtung (4) herabfallende Teile (2) auffangende Auffangoberfläche (30) relativ zu der Ordnungseinrichtung (4) bewegbar ist für den Abtransport von Teilen (2) in zumindest einer Transportrichtung (26), wobei insbesondere vorgesehen ist, dass der Antrieb (8) in zu der Transportrichtung (26) quer orientierten Querschnitten tiefer als die Auffangeinrichtung (7), insbesondere unterhalb der Auffangeinrichtung (7), angeordnet ist.

5. Zuführsystem (1) nach einem der vorangehenden Ansprüche, **dadurch gekennzeichnet, dass** die Auffangeinrichtung (7) in einer vertikalen Projektionsbetrachtung, d.h. in einer vertikal zu der Aufstellebene gerichteten Projektionsbetrachtung, zwischen den beiden mit der Ordnungseinrichtung (4) gekoppelten Linearvibrationsförderantrieben (6) angeordnet ist und dass insbesondere ein mit der Auffangeinrichtung (7) verbundener Antrieb (8) in einer vertikalen Projektionsbetrachtung, d.h. in einer vertikal zu der Aufstellebene gerichteten Projektionsbetrachtung, zwischen den beiden mit der Ordnungseirurichtung (4) gekoppelten Linearvibrationsförderantrieben (6) angeordnet ist.

6. Zuführsystem (1) nach einem der vorangehenden Ansprüche, **dadurch gekennzeichnet, dass** die Auffangeinrichtung (7) räumlich ganz oder teilweise in dem Zwischenraum zwischen den beiden mit der Ordnungseinrichtung (4) gekoppelten Linearvibrationsförderantrieben (6) angeordnet ist und dass insbesondere der mit der Auffangeinrichtung (7) verbundene Antrieb (8) räumlich ganz oder teilweise in dem Zwischenraum zwischen den beiden mit der Ordnungseinrichtung (4) gekoppelten Linearvibrationsförderantrieben (6) angeordnet ist.

7. Zuführsystem (1) nach einem der vorangehenden Ansprüche 4-6, **dadurch gekennzeichnet, dass** es sich bei dem zur Bewegung der Auffangoberfläche (28) dienenden Antrieb (8) um einen Linearvibrationsförderantrieb (8') handelt, der insbesondere baugleich zu den mit der Ordnungseinrichtung (4) gekoppelten Linearvibrationsförderantrieben (6) ist.

8. Zuführsystem (1) nach einem der vorangehenden Ansprüche, **dadurch gekennzeichnet, dass** die Ordnungseinrichtung (4) in einer vertikalen Projektionsbetrachtung, d.h. in einer vertikal zu der Aufstellebene gerichteten Projektionsbetrachtung, insbesondere mittig, zwischen den beiden Linearvibrationsförderantrieben (6) angeordnet ist.

9. Zuführsystem (1) nach einem der vorangehenden Ansprüche, **dadurch gekennzeichnet, dass** es sich bei der Auffangeinrichtung (7) um eine an einem Längsende oder an ihren beiden Längsenden offene Wanne (7') handelt, wobei insbesondere vorgesehen ist, dass es sich bei deren Antrieb (8) um einen Linearvibrationsförderantrieb (8') handelt, von dem die Wanne (7') getragen wird.

10. Zuführsystem (1) nach einem der vorangehenden Ansprüche, **dadurch gekennzeichnet, dass** die Auffangeinrichtung (7) tiefer liegend als die Tragstruktur (5) angeordnet ist.

11. Zuführsystem (1) nach einem der vorangehenden Ansprüche, **dadurch gekennzeichnet, dass** die Höhendifferenz (H) zwischen der Ordnungseinrichtung (4), insbesondere zwischen ihrer Teileführung (28) für Teile (2), und einer Auffangoberfläche (28), bei der es sich insbesondere um einen Wannenboden handelt, der Auffangeinrichtung (7) kleiner als 120 Millimeter ist und insbesondere im Wertebereich von 30 bis 50 Millimeter liegt.

12. Zuführsystem (1) nach einem der vorangehenden Ansprüche, **dadurch gekennzeichnet, dass** die Ordnungseinrichtung (4) und die Auffangeinrichtung (7) voneinander beabstandet auf einer gemeinsamen Basis (13), bei der es sich insbesondere um eine Grundplatte (13') handelt, angeordnet sind und/oder dass der oder die mit der Ordnungseinrichtung (4) zusammen wirkende Linearvibrationsförderantriebe (6) von dem mit der Auffangeinrichtung (7) zusammen wirkenden Antrieb (8) beabstandet auf der Basis (13) angeordnet sind und/oder dass die Ordnungseinrichtung (4) von dem mit ihr zusammen wirkenden Linearvibrationsförderantrieb (6) oder von den mit ihr zusammen wirkenden Linearvibrationsförderantrieben (6) getragen wird und dass zwischen diesem Linearvibrationsförderantrieb (6) oder diesen Linearvibrationsförderantrieben (6) und der Basis (13) Feder- und/oder Dämpferelemente angebracht sind und/oder dass die Auffangeinrichtung (7) von dem mit ihr zusammen wirkenden Antrieb (8) getragen wird und dass zwischen diesem Antrieb (8) und der Basis (13) Feder- und/oder Dämpferelemente angebracht sind.

13. Zuführsystem (1) nach einem der vorangehenden Ansprüche, **dadurch gekennzeichnet, dass** im Betrieb die von der Auffangeinrichtung (7) vorgegebene Transportrichtung (26) von Teilen (2) entgegengerichtet oder gleichgerichtet oder quer verlaufend ist zu der von der Ordnungseinrichtung (4) vorgegebenen Zuführrichtung (25) von Teilen (2).

14. Zuführsystem (1) nach einem der vorangehenden Ansprüche, **dadurch gekennzeichnet, dass** jeder mit der Ordnungseinrichtung (4) zu deren Vibrationsanregung verbundene Linearvibrationsförderantrieb (6) zumindest folgende Komponenten umfasst:
einen Schwinger (35) und eine Gegenmasse (36), die mittels Federn (37) relativ zueinander bewegbar angeordnet sind, sowie einen Vibrationsantrieb (38), mittels dem der Schwinger (35) und die Gegenmasse (36) entgegen der Federkraft der Federn (37) relativ zueinander bewegbar sind, wobei der Schwinger (35) mit der Ordnungseinrichtung (4) zu deren Vibrationsanregung gekoppelt ist, insbesondere mittelbar durch Zwischenschaltung der Tragstruktur (5).

15. Zuführsystem (1) nach einem der vorangehenden Ansprüche, **dadurch gekennzeichnet, dass** der mit der Auffangeinrichtung (7) zu deren Vibrationsanregung verbundene Linearvibrationsförderantrieb (8') zumindest folgende Komponenten umfasst: einen Schwinger (35) und eine Gegenmasse (36), die mittels Federn (37) relativ zueinander bewegbar angeordnet sind, sowie einen Vibrationsantrieb (38), mittels dem der Schwinger (35) und die Gegenmasse (36) entgegen der Federkraft der Federn (37) relativ zueinander bewegbar sind, wobei der Schwinger (35) mit der Auffangeinrichtung (7) zu deren Vibrationsanregung gekoppelt ist.

## Claims

1. Feed system (1), in particular for feeding parts (2) to a mounting and/or loading and/or processing and/or packaging device (3) or the like, the feed system (1) comprising at least one ordering device (4), in particular for transporting and/or separating and/or sorting and/or aligning and/or distributing parts (2), and at least one collection device (7) for collecting and in particular carrying away parts (2) that fall from the ordering device (4) during operation, the feed system (1) comprising at least two, in particular identical, linear vibratory conveyor drives (6) that are coupled to the ordering device (4), said linear vibratory conveyor drives (6) being arranged so as to be mutually spaced, in particular having vibratory planes that are oriented in parallel with one another, **characterised in that** the ordering device (4) is attached to an in particular frame-like support structure (5) comprising one or more cut-outs (31) from the upper face through to the lower face thereof, and said device is arranged above the support structure (5), each of the linear vibratory conveyor drives (6) being attached to the support structure (5) at or in the region of its two edges (32) that are lateral with respect to the ordering device (4), and which drives are arranged such that they are deeper than the support structure (5).

2. Feed system according to claim 1, **characterised in that** the ordering device (4) is arranged so as to be movable relative to the collection device (7) such that, during operation, vibratory movements relative to the collection device (7) can be stimulated in the ordering device (4) by means of the linear vibratory conveyor drives (6).

3. Feed system (1) according either of the preceding claims, **characterised in that** the ordering device (4) comprises at least one parts guide (29) and **in that** the collection device (7) for collecting, completely or in part, parts (2) falling from the ordering device (4) during operation, in particular at least one collection surface (30) for collecting parts (2) falling from the ordering device (4) during operation, which surface is associated with the collection device (7), extends such that it is deeper than the parts guide (29) of the ordering device (4), in particular extending below and/or laterally with respect to the parts guide (29).

4. Feed system (1) according to any of the preceding claims, **characterised in that** the feed system (1) comprises at least one drive (8), by means of which at least one collection surface (30) that is associated with the collection device (7) and collects parts (2) falling from the ordering device (4) during operation can be moved relative to the ordering device (4) in order to carry parts (2) away in at least one transport direction (26), it being provided in particular for the drive (8) to be arranged such that it is deeper than the collection device (7), in particular below the collection device (7), in cross sections that are perpendicular to the transport direction (26).

5. Feed system (1) according to any of the preceding claims, **characterised in that**, in a vertical projection view, i.e. in a projection view that is oriented vertically relative to the installation plane, the collection device (7) is arranged between the two linear vibratory conveyor drives (6) coupled to the ordering device (4), and **in that**, in a vertical projection view, i.e. in a projection view that is oriented vertically relative to the installation plane, in particular a drive (8) connected to the collection device (7) is arranged between the two linear vibratory conveyor drives (6) coupled to the ordering device (4).

6. Feed system (1) according to any of the preceding claims, **characterised in that** the collection device (7) is arranged, completely or in part, in the space between the two linear vibratory conveyor drives (6) coupled to the ordering device (4), and **in that** in particular the drive (8) connected to the collection device (7) is arranged, completely or in part, in the space between the two linear vibratory conveyor drives (6) coupled to the ordering device (4).

7. Feed system (1) according to any of claims 4 to 6, **characterised in that** drive (8) for moving the collection surface (28) is a linear vibratory conveyor drive (8') that is in particular identical to the linear vibratory conveyor drives (6) coupled to the ordering device (4).

8. Feed system (1) according to any of the preceding claims, **characterised in that**, in a vertical projection view, i.e. in a projection view that is oriented vertically relative to the installation plane, the ordering device (4), is arranged between the two linear vibratory conveyor drives (6), in particular in the centre.

9. Feed system (1) according to any of the preceding claims, **characterised in that** the collection device (7) is a trough (7') that is open at one longitudinal end or at both longitudinal ends thereof, it being provided in particular for the drive (8) thereof to be a linear vibratory conveyor drive (8') that supports the trough (7').

10. Feed system (1) according to any of the preceding claims, **characterised in that** the collection device (7) is arranged such that it is deeper than the support structure (5).

11. Feed system (1) according to any of the preceding claims, **characterised in that** the height difference (H) between the ordering device (4), in particular between the parts guide (28) thereof for parts (2), and a collection surface (28), which is in particular a trough bottom, of the collection device (7) is less than 120 millimetres and is in particular in the value range of from 30 to 50 millimetres.

12. Feed system (1) according to any of the preceding claims, **characterised in that** the ordering device (4) and the collection device (7) are arranged so as to be mutually spaced on a common base (13), which is in particular a base plate (13'), and/or **in that** the linear vibratory conveyer drive(s) (6) cooperating with the ordering device (4) is/are arranged on the base (13) so as to be spaced from the drive (8) cooperating with the collection device (7), and/or **in that** the ordering device (4) is supported by the linear vibratory conveyor drive (6) cooperating therewith or the linear vibratory conveyor drives (6) cooperating therewith, and **in that** spring and/or damping elements are fitted between said linear vibratory conveyor drive (6) or said linear vibratory conveyor drives (6) and the base (13), and/or **in that** the collection device (7) is supported by the drive (8) cooperating therewith, and **in that** spring and/or damping elements are fitted between said drive (8) and the base (13).

13. Feed system (1) according to any of the preceding claims, **characterised in that**, during operation, the transport direction (26) of parts (2) set by the collection device (7) is in the opposite direction, the same direction or extends perpendicularly to the feed direction (25) of parts (2) set by the ordering device (4).

14. Feed system (1) according to any of the preceding claims, **characterised in that** each linear vibratory conveyor drive (6) connected to the ordering device (4) for the vibratory stimulation thereof comprises at least the following components:
an oscillator (35) and a counterweight (36) that can be moved relative to one another by means of springs (37), and a vibratory drive (38) by means of which the oscillator (35) and the counterweight (36) can be moved relative to one another against the resilience of the springs (37), the oscillator (35) being coupled to the ordering device (4) for the vibratory stimulation thereof, in particular indirectly by interposing the support structure (5).

15. Feed system (1) according to any of the preceding claims, **characterised in that** the linear vibratory conveyor drive (8') connected to the collection device (7) for the vibratory stimulation thereof comprises at least the following components:
an oscillator (35) and a counterweight (36) that are arranged so as to be movable relative to one another by means of springs (37), and a vibratory drive (38) by means of which the oscillator (35) and the counterweight (36) can be moved relative to one another against the resilience of the springs (37), the oscillator (35) being coupled to the collection device (7) for the vibratory stimulation thereof.

## Revendications

1. Système d'acheminement (1), en particulier pour l'acheminement de pièces (2) à un dispositif (3) de montage et/ou de garnissage et/ou de traitement et/ou d'emballage ou similaire, dans lequel le système d'acheminement (1) comprend : au moins un dispositif d'ordonnancement (4), en particulier pour le transport et/ou l'individualisation et/ou le tri et/ou l'orientation et/ou la distribution de pièces (2), et au moins un dispositif d'interception (7) pour intercepter et en particulier pour transporter des pièces (2) tombant en fonctionnement du dispositif d'ordonnancement (4), dans lequel le système d'acheminement (1) comprend au moins deux transporteurs linéaires à vibration (6) qui, en particulier, sont de construction identique l'un par rapport à l'autre et sont couplés avec le système d'ordonnancement (4), dans lequel les transporteurs linéaires à vibration (6) sont distants l'un de l'autre avec en particulier des plans de vibration orientés parallèlement l'un par rapport à l'autre, **caractérisé en ce que** le dispositif d'ordonnancement (4) est fixé à une structure de support (5) réalisée en particulier sous forme de cadre, laquelle structure de support (5) comprend un ou plusieurs évidements (31) traversant depuis son côté supérieur à son côté inférieur, le dispositif d'ordonnancement (4) étant agencé au-dessus de la structure de support (5), dans lequel les transporteurs linéaires à vibration sont fixés chacun à la structure de support à l'un respectif de ses deux bords latéraux (32) par rapport au dispositif d'ordonnancement (4) ou dans la zone de celui-ci et sont agencés plus bas que la structure de support (5).

2. Système d'acheminement selon la revendication 1, **caractérisé en ce que** le dispositif d'ordonnancement (4) est agencé mobile par rapport au dispositif d'interception (7) de manière à ce que le dispositif d'ordonnancement (4) puisse en fonctionnement être soumis à des mouvements vibratoires par rapport au dispositif d'interception (7) au moyen des transporteurs linéaires à vibration (6).

3. Système d'acheminement (1) selon l'une des revendications précédentes, **caractérisé en ce que** le dispositif d'ordonnancement (4) comprend au moins un guidage de pièces (29) et **en ce que** le dispositif d'interception (7) pour intercepter des pièces (2) tombant en fonctionnement du dispositif d'ordonnancement (4), s'étend en tout ou partie, en particulier au moins une surface supérieure d'interception (30) pour intercepter des pièces (2) tombant en fonctionnement du dispositif d'ordonnancement et qui fait partie du dispositif d'interception (7), plus bas que le guidage de pièces (29) du dispositif d'ordonnancement (4), en particulier en-dessous et/ou latéralement du guidage de pièces (29).

4. Système d'acheminement (1) selon l'une des revendications précédentes, **caractérisé en ce que** le système d'acheminement (1) comprend au moins un dispositif d'entrainement (8) au moyen duquel au moins une surface supérieure d'interception (30) faisant partie du dispositif d'interception (7) et interceptant les pièces (2) tombant en fonctionnement du dispositif d'ordonnancement (4), est déplaçable relativement au dispositif d'ordonnancement (4) pour le transport de pièces (2) dans au moins une direction de transport (26), dans lequel il est prévu en particulier que le dispositif d'entrainement (8), dans des sections transversales orientées transversalement à la direction de transport 26), est agencé plus bas que le dispositif d'interception (7), en particulier en-dessous du dispositif d'interception (7).

5. Système d'acheminement (1) selon l'une des revendications précédentes, **caractérisé en ce que** le dispositif d'interception (7), dans une vue en projection verticale, c'est-à-dire une vue en projection orientée selon une verticale au plan de montage, est agencé entre les deux transporteurs linéaires à vibration (6) qui sont couplés avec le dispositif d'ordonnancement (4) et **en ce que**, en particulier, un dispositif d'entrainement (8) lié au dispositif d'interception (7), dans une vue en projection verticale, c'est-à-dire dans une vue en projection orientée selon une verticale au plan de montage, est agencé entre les deux transporteurs linéaires à vibration (6) qui sont couplés avec le dispositif d'ordonnancement (4).

6. Système d'acheminement (1) selon l'une des revendications précédentes, **caractérisé en ce que** le dispositif d'interception (7) est agencé spatialement en tout ou partie dans l'espace intermédiaire entre les deux transporteurs linéaires à vibration (6) qui sont couplés au dispositif d'ordonnancement (4) et **en ce que**, en particulier, le dispositif d'entrainement (8) lié au dispositif d'interception (7), est agencé spatialement en tout ou partie dans l'espace intermédiaire entre les deux transporteurs linéaires à vibration (6) qui sont couplés au dispositif d'ordonnancement (4).

7. Système d'acheminement (1) selon l'une des revendications 4 à 6, **caractérisé en ce que** le dispositif d'entraînement (8) servant au mouvement de la surface supérieure d'interception (28), est un transporteur linéaire à vibration (8') lequel est, en particulier, de construction identique aux transporteurs linéaires à vibration (6) qui sont couplés au dispositif d'ordonnancement (4).

8. Système d'acheminement (1) selon l'une des revendications précédentes, **caractérisé en ce que** le dispositif d'ordonnancement (4), dans une vue en projection verticale, c'est-à-dire dans une vue en projection orientée selon une verticale au plan de montage, est agencé centralement entre les deux transporteurs linéaires à vibration (6).

9. Système d'acheminement (1) selon l'une des revendications précédentes, **caractérisé en ce que** le dispositif d'interception (7) est un bac (7') ouvert à une extrémité longitudinale ou à ses deux extrémités longitudinales, dans lequel il est prévu, en particulier, que son dispositif d'entrainement (8) est un transporteur linéaire à vibration (8') qui supporte le bac (7').

10. Système d'acheminement (1) selon l'une des revendications précédentes, **caractérisé en ce que** le dispositif d'interception (7) est agencé plus bas que la structure de support (5).

11. Système d'acheminement (1) selon l'une des revendications précédentes, **caractérisé en ce que** la différence de hauteur (H) entre le dispositif d'ordonnancement (4), en particulier entre son guidage de pièces (28) et une surface supérieure d'interception (28) du dispositif d'interception (7) laquelle consiste, en particulier, en un fond de bac, est inférieure à 120 millimètres et est située, en particulier, dans l'intervalle de 30 à 50 millimètres.

12. Système d'acheminement (1) selon l'une des revendications précédentes, **caractérisé en ce que** le dispositif d'ordonnancement (4) et le dispositif d'interception (7) sont agencés en étant espacés l'un de l'autre sur une base commune (13) qui est, en particulier, une plaque de base (13') et/ou **en ce que** le ou les transporteurs linéaires à vibration (6) qui coopèrent avec le dispositif d'ordonnancement (4), sont agencés sur la base (13) en étant séparés du dispositif d'entrainement (8) qui coopère avec le dispositif d'interception (7) et/ou **en ce que** le dispositif d'ordonnancement (4) est supporté par le transporteur linéaire à vibration qui coopère avec lui ou par les transporteurs linéaires à vibration qui coopèrent avec lui et que des éléments élastiques et/ou d'amortissement sont agencés entre ce transporteur linéaire à vibration (6) ou ces transporteurs linéaires à vibration (6) et la base (13) et/ou **en ce que** le dispositif d'interception (7) est supporté par le dispositif d'entrainement (8) qui coopère avec lui et que des éléments élastiques et/ou d'amortissement sont agencés entre ce dispositif d'entrainement (8) et la base (13).

13. Système d'acheminement (1) selon l'une des revendications précédentes, **caractérisé en ce que**, en fonctionnement, la direction de transport (26) de pièces (2) prédéfinie par le dispositif d'interception (7) est orientée à l'encontre ou à l'identique ou transversalement à la direction d'acheminement (25) de pièces (2) prédéfinie par le dispositif d'ordonnancement (4).

14. Système d'acheminement (1) selon l'une des revendications précédentes, **caractérisé en ce que** chaque transporteur linéaire à vibration (6) lié au dispositif d'ordonnancement (4) pour lui appliquer des vibrations, comprend au moins les composants suivants :
un balancier (35) et un contrepoids (36) lesquels sont agencés mobiles l'un relativement à l'autre par le biais de ressorts (37), ainsi qu'un générateur de vibrations (38) au moyen duquel le balancier (35) et le contrepoids (36) sont déplaçables l'un relativement à l'autre à l'encontre de la force élastique des ressorts (37), dans lequel le balancier (35) est couplé avec le dispositif d'ordonnancement (4) pour lui appliquer des vibrations, en particulier indirectement par le biais de la structure de support (5).

15. Système d'acheminement (1) selon l'une des revendications précédentes, **caractérisé en ce que** le transporteur linéaire à vibration (8') lié avec le dispositif d'interception (7) pour lui appliquer des vibrations, comprend au moins les composants suivants : un balancier (35) et un contrepoids (36) lesquels sont agencés mobiles l'un relativement à l'autre par le biais de ressorts (37), ainsi qu'un générateur de vibrations (38) au moyen duquel le balancier (35) et le contrepoids (36) sont déplaçables l'un relativement à l'autre à l'encontre de la force élastique des ressorts (37), dans lequel le balancier (35) est couplé avec le dispositif d'interception (7) pour lui appliquer des vibration.
